Europäisches Patentamt

(19) European Patent Office

Office européen des brevets

(11) Numéro de publication : **0 168 269**
**B1**

(12) **FASCICULE DE BREVET EUROPÉEN**

(45) Date de publication du fascicule du brevet :
**13.12.89**

(21) Numéro de dépôt : **85400893.5**

(22) Date de dépôt : **07.05.85**

(51) Int. Cl.⁴ : **G 11 B   5/588**

(54) **Alignement de suivi de pistes pour tête magnétique tournante.**

(30) Priorité : **28.06.84 FR 8410213**

(43) Date de publication de la demande :
**15.01.86 Bulletin 86/03**

(45) Mention de la délivrance du brevet :
**13.12.89 Bulletin 89/50**

(84) Etats contractants désignés :
**DE FR GB IT**

(56) Documents cités :
**EP–A– 0 030 469**
**FR–A– 2 276 653**
**FR–A– 2 365 853**
**GB–A– 1 114 977**
**US–A– 4 314 284**

(73) Titulaire : **SCHLUMBERGER INDUSTRIES**
**50, avenue Jean Jaurès**
**F-92120 Montrouge (FR)**

(72) Inventeur : **Sulzer, Jean-François**
**7, rue des Pommeraies**
**F-92310 Sevres (FR)**

(74) Mandataire : **Ritzenthaler, Jacques**
**SCHLUMBERGER INDUSTRIES CENTRE DE RECHER-**
**CHE/SMR B.P. 620-05**
**F-92542 Montrouge Cedex (FR)**

Jouve, 18, rue St-Denis, 75001 Paris, France

## Description

La présente invention concerne les têtes magnétiques tournantes associées, par exemple, à des enregistreurs sur bande magnétique, et concerne plus particulièrement une technique permettant de maintenir l'angle correct de suivi de piste malgré les fluctuations de vitesse de la bande ou de la tête.

Les signaux enregistrés sur bande magnétique peuvent être disposés selon des pistes parallèles obliques par rapport à la longueur de la bande. Lors de la lecture, on fait en sorte que la bande enveloppe partiellement un tambour qui comprend une tête de lecture se déplaçant sur un axe oblique par rapport au trajet de la bande. La vitesse tangentielle de la tête est supérieure à la vitesse de la bande et les pistes sont décalées le long de la bande de la distance correspondant au déplacement de la bande pendant un tour de la tête. On peut prévoir plusieurs têtes fixées sur le même rotor et réparties angulairement pour tracer les pistes selon des hélices intercalées doubles ou multiples.

Il s'avère difficile de synchroniser les vitesses de la bande et de la tête pour que les têtes suivent les pistes. On prévoit ordinairement des repères sur le bord de la bande pour aider un détecteur à synchroniser les vitesses de la bande et de la tête. Si l'on augmente ou diminue la vitesse de la bande pour modifier le flux d'informations, l'angle tracé par les têtes doit être également modifié. L'amplitude instantanée de cette correction est une fonction sensiblement linéaire de la position angulaire de la tête par rapport à la portion de la piste balayée. Lorsque la lecture de la bande se fait selon un arc de 180° autour d'un tambour, la correction est constituée par une onde triangulaire de la même période que celle de la rotation des têtes tournantes. L'angle de la trajectoire de la tête par rapport à celle de la bande a été ajusté généralement à l'aide de freins pour ralentir le cabestan d'entraînement de la bande ou le tambour portant la tête. Une telle disposition est inefficace et augmente l'encombrement de la machine de lecture.

En plus de la correction des vitesses de balayage, selon des techniques récentes, les têtes magnétiques élémentaires sont montées sur des entretoises piézoélectriques qui produisent un déplacement proportionnel à la tension électrique appliquée. Selon le brevet US N° 3 787 616, les têtes sont portées par des feuilles comportant des éléments piézoélectriques. Lors de la détection d'une perte de synchronisation, une tension peut être appliquée pour faire fléchir les feuilles vers le haut ou vers le bas, afin d'avancer ou de retarder le début de lecture d'une piste. La tension est soit déterminée par la loi de variation triangulaire précitée, soit calculée par une boucle de commande et est transmise aux feuilles du rotor portant la tête par l'intermédiaire de balais et de contacts glissants. Toutefois, une différence de vitesse croissante fait dévier finalement les feuilles jusqu'à leur limite, après quoi aucune compensation de vitesse n'est possible. Selon le brevet US N° 4 410 918, lorsqu'une feuille atteint sa déviation maximale dans un sens, elle est déplacée rapidement vers la déviation maximale opposée. Cela permet de corriger un écart de synchronisation croissant mais le déplacement des têtes a pour effet de sauter une piste ou de relire deux fois la même piste. Même dans les limites de correction possibles, la tête est positionnée pour coïncider en un seul point, par exemple le départ, de chaque piste. Au-delà de ce point, les différences de vitesse entraînent des déviations de suivi de piste. La tête effectue toujours le balayage selon un angle différent que celui de la piste.

L'utilisation d'entretoises piézoélectriques nécessite au moins un contact glissant et un balai par tête. Les contacts glissants sont peu désirables parce qu'ils sont encombrants, augmentent la longueur de l'arbre non supporté, créent des pertes par frottement et sont sujets à l'usure. Ces techniques sont d'une mise en œuvre fastidieuse, notamment lorsqu'il s'agit d'applications telles que les enregistreurs numériques rapides utilisées pour les instruments ou la télévision, qui impliquent des vitesses tangentielles dépassant 50 m/s et par conséquent des forces centrifuges qui contrarient la déviation des entretoises piézoélectriques. Par exemple, pour un tambour d'un diamètre de 8 cm, une vitesse tangentielle de 40 m/s se traduit par une force centrifuge de 40 000 m/s$^2$ (4 000 G). Les excursions limitées des entretoises piézoélectriques rendent impossibles les applications de celles-ci utilisant plusieurs têtes en parallèles et nécessitant des accélérations élevées.

On a proposé (voir brevet US 4 314 284) un dispositif dans lequel la tête est fixée à l'extrémité d'une lame élastique solidaire d'une bobine apte à loger dans une gorge prévue sur un aimant annulaire solidaire du plateau inférieur ; sur la base de la vitesse de bande, est engendré un signal de déflection en dents de scie, qui est ensuite appliqué à la bobine ; la force électromagnétique qui en découle plie la lame et donc dévie la tête axialement. Un tel dispositif connu nécessite des contacts glissants avec les inconvénients précités qui en découlent. De plus, il conduit à un encombrement important compte tenu de la présence de la bobine solidaire de la lame et de l'aimant annulaire. En outre, la force est appliquée à un élément intermédiaire, ce qui diminue la précision.

On connaît également, par le brevet FR 2 365 853, un dispositif pour faire varier, en fonction de la cadence d'enregistrement et/ou de lecture, la position de l'une des têtes par rapport à l'autre, selon un déplacement relatif hélicoïdal ; chaque tête est solidaire d'un bras axial lui-même fixé à un arbre ; les deux arbres sont concentriques et un ensemble came-coulisseau permet le déplacement relatif hélicoïdal des deux arbres, et donc des têtes. Ce dispositif connu est très compliqué et présente un encombrement important ; de plus, il n'assure pas le suivi de la tête par rapport aux pistes.

La présente invention remédie à ces inconvénients et concerne un dispositif dans lequel des erreurs d'angle de suivi de piste dues à des différences de vitesse sont corrigées en faisant dévier périodiquement

2

la tête magnétique élémentaire sensiblement parallèlement à son axe de rotation tout en balayant chaque piste. Une modification de trajectoire est nécessaire pour balayer une piste à chaque tour de la tête. On peut faire en sorte que la tête oscille une fois par tour transversalement, assurant de ce fait une déviation appropriée qui varie pratiquement linéairement lors du passage de la piste à lire.

La solution du problème est donnée par l'invention comme définie dans les revendications indépendantes.

Un mode de réalisation préféré de l'invention comprend un arbre rotatif, un support fixé selon l'axe de l'arbre, apte à tourner et à être relativement inflexible dans un plan perpendiculaire à l'arbre et à être relativement flexible dans le sens parallèle à l'arbre, et une tête magnétique élémentaire fixée sur l'extrémité extérieure du support. Le support tourne dans un espace compris entre deux disques ou organes cylindriques coaxiaux par rapport à l'arbre. Lorsque la tête passe devant un ou plusieurs aimants prévus sur la périphérie des disques, une force magnétique fait dévier la tête et la fait osciller. La description fait en référence aux dessins annexés, dans lesquels :

— La figure 1 est une vue en coupe transversale d'un ensemble de têtes complet, représentant les disques stationnaires, les supports des têtes tournantes et les têtes disposées dans l'espace compris entre les disques et, en traits interrompus, la trajectoire d'une tête magnétique défilant diagonalement par rapport au tambour ;

— La figure 2 représente des pistes parallèles disposées sur la bande, obliquement par rapport à sa longueur ;

— La figure 3 représente les composantes vectorielles $V_b$ (vitesse de bande) et $V_t$ (vitesse de tête) de l'angle de la piste tracé par la tête et montre également comment la trajectoire de la tête doit changer lorsque le rapport des vitesses change ;

— La figure 4 est une vue en coupe suivant la ligne IV-IV de la figure 1, représentant la bande guidée sur une certaine distance autour du tambour et les supports des têtes tournantes ;

— La figure 5 est une vue en coupe suivant la ligne V-V de la figure 4, représentant les électro-aimants avec une tête élémentaire passant entre eux ; et

— La figure 6 est un schéma électrique d'un des détecteurs de position de tête.

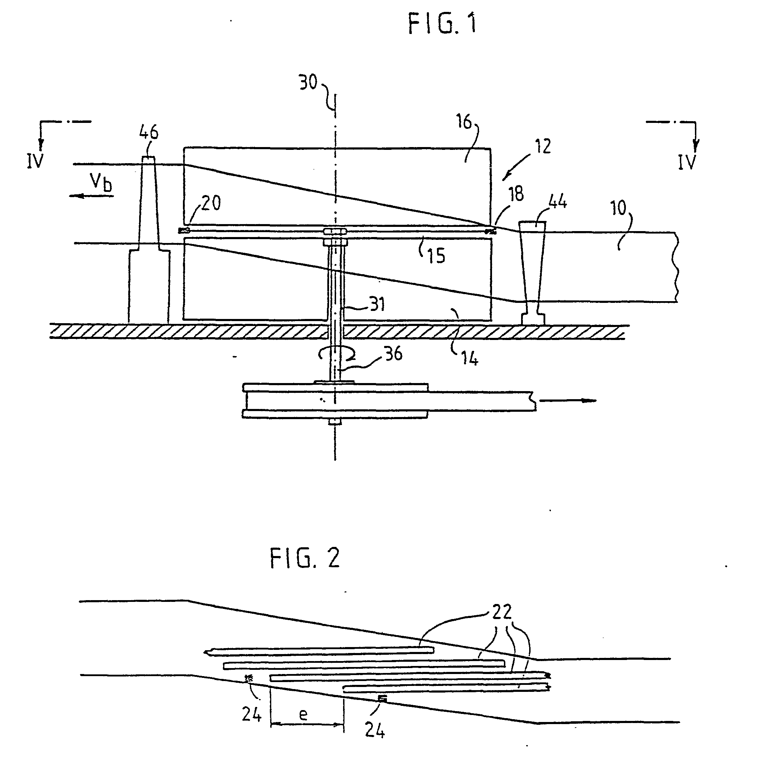

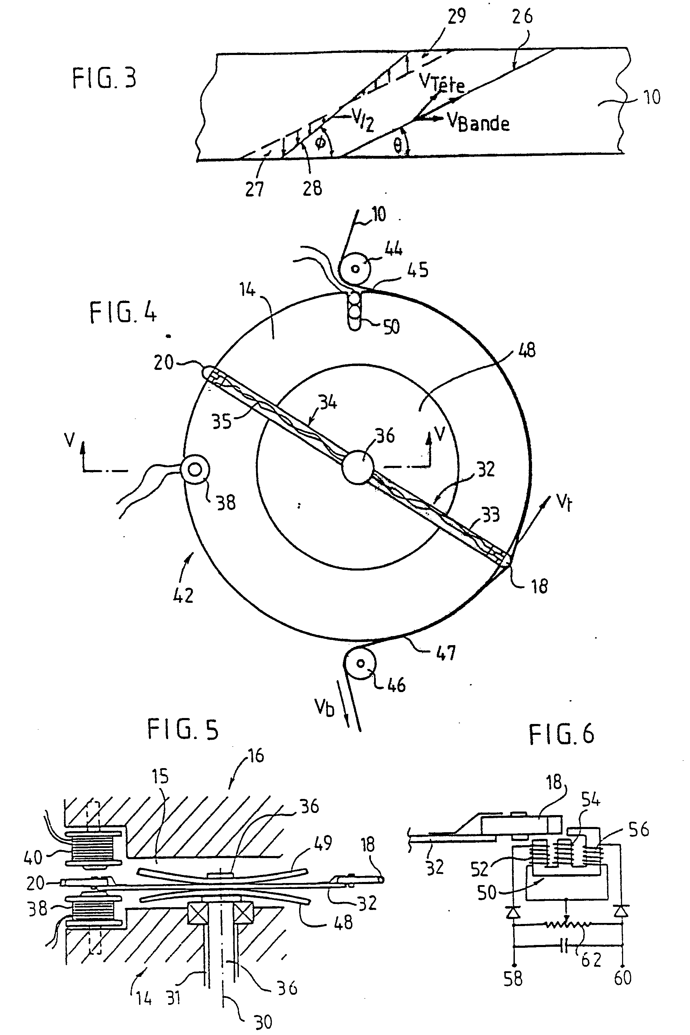

La figure 1 montre une bande magnétique 10 passant obliquement devant un tambour 12 qui comprend une paire de disques fixes 14, 16 disposés de part et d'autre d'une paire de têtes magnétiques élémentaires 18 et 20 tournant dans un plan. Des blocs d'informations peuvent être enregistrés et relus sur des pistes 22 parallèles sur la bande et formant un certain angle par rapport à sa longueur, comme le montre la figure 2. Lorsqu'elles tournent, les têtes 18 et 20 suivent les pistes 22. Pendant que chaque tête tourne entre la fin d'un contact avec la bande 10 au niveau du point 47 du tambour et le début du contact suivant au niveau du point 45, figure 4, la bande se déplace d'une distance longitudinale entre pistes « e », comme le montre la figure 2. Lorsque la vitesse tangentielle d'une tête et la vitesse longitudinale de la bande ne sont plus synchronisées, ce qui se produit lorsqu'on augmente ou diminue la vitesse de la bande pour effectuer la compression ou l'expansion du temps, la tête tracera un angle incorrect sur la bande, figure 3.

La vitesse à laquelle les pistes 22 défilent est détectée de manière générale à l'aide de repères 24 prévus le long d'un bord de la bande, cette vitesse étant comparée à la vitesse de rotation de la tête par des moyens classiques. Un rapport de vitesse incorrect indique que la tête ne suit pas la piste selon l'angle correct, et qu'il faut ajuster sa trajectoire.

Par exemple, supposons que l'angle de suivi piste correct est $\theta$ comme l'indique la ligne 26 et supposons que la vitesse de la bande $V_b$ est alors réduite de moitié, le nouvel angle de suivi de piste $\varnothing$ sera la ligne 28. Comme l'indiquent les flèches, la tête 18 ou 20 doit être déplacée pour commencer le suivi de piste au-dessous de son plan normal, retourner à un niveau normal (déplacement nul) au niveau du milieu de la piste 22 et continuer à un niveau plus élevé pour lire la dernière moitié de la piste. Avant de commencer à lire la piste suivante, la tête doit être portée à nouveau à un niveau plus bas. Si la différence de vitesse est inversée, les corrections nécessaires le doivent être aussi.

Pour que la tête conserve le nouvel angle de suivi de piste, la présente invention prévoit le déplacement de la tête transversalement par rapport à son plan de rotation moyen, sur tout son parcours de contact ou de coopération avec la bande, à l'aide d'un dispositif qui reste fixe par rapport au tambour. La tête peut être déplacée en appliquant une force transversale au niveau d'un ou de plusieurs emplacements fixes sélectionnés le long de son parcours circulaire. Après quoi, des forces de retour sollicitent la tête vers son niveau d'équilibre et un mouvement oscillatoire transversal s'ensuit qui peut être entretenu lors du passage périodique de la tête devant l'emplacement d'application de la force transversale.

Selon un mode de réalisation préféré, chaque tête est montée sur une extrémité radialement extérieure d'un bras de support apte à tourner autour d'un axe 30 aligné avec celui du tambour. Des supports 32, 34 sont fixés au centre de rotation de l'arbre 36, lequel est disposé dans un perçage axial 31.

Le support, tout en étant sensiblement inflexible dans le sens tangentiel à la rotation de la tête, est flexible dans une direction transversale, ordinairement perpendiculaire au plan de rotation moyen. Lors de la rotation de la tête, elle est soumise à une force centrifuge qui tend à la ramener vers sa position d'équilibre après chaque application périodique de la force transversale.

Il s'ensuit un mouvement pendulaire de la tête, mouvement qui est entretenu lors du passage périodique de la tête par l'emplacement d'application de la force transversale. La force peut également être appliquée à une autre masse contiguë à la tête et fixée sur elle. Le mouvement pendulaire peut être entretenu par des forces issues d'un champ magnétique, électrostatique, etc. le long de la trajectoire de la tête. Le mouvement nécessaire de la tête parallèlement à l'axe 30 est calculé par des circuits appropriés, non représentés, bien connus de ceux du métier. Selon la grandeur de la correction nécessaire, une certaine tension, par exemple, est appliquée sur l'un ou l'autre des électro-aimants 38 et 40 pour osciller la tête comme un pendule.

Relativement à la bande, la trajectoire des têtes est une sinusoïde dont l'amplitude est fonction de la force pendulaire. Pour minimiser l'effet non linéaire du mouvement sinusoïdal, le tambour 12 doit être agencé pour balayer les pistes 22 sur un arc inférieur à 180° de part et d'autre d'un passage par zéro. Le ou les aimants 38, 40 doivent être situés sur le tambour 12 du côté 42 opposé à la partie de la bande 10 et sur la bissectrice de l'arc de lecture, qui correspond à l'autre passage par zéro des têtes 18, 20. Une telle disposition des aimants permet d'éviter d'entraver le fonctionnement des têtes lors de la lecture d'une piste. Les têtes, étant elles-mêmes en un matériau ferromagnétique, répondent à la force magnétique et aucun élément supplémentaire n'est nécessaire.

La longueur du support 32, 34 et de la tête 18, 20 permettant d'obtenir un battement de la période désirée, typiquement la même que sa révolution, est calculée par la mise en équation de la période $T_p$ d'un pendule simple de longueur 1 dans un champ d'accélération $\gamma$ (indépendant de la masse suspendue).

$$T_p = 2\pi\sqrt{\frac{1}{\gamma}}$$

et la période de rotation d'un mobile subissant une force centrifuge d'accélération $\gamma$ à une distance r de son centre :

$$T_m = 2\pi\sqrt{\frac{r}{\gamma}}$$

Par conséquent, sous une force centrifuge, un simple pendule de longueur 1 = r présente la même période d'oscillation que la révolution, quel que soit la masse et le plan d'oscillation considérés. (Abstraction faite de phénomènes parasites tels que « l'effet Coriolis »).

Dans le mode de réalisation préféré, une bande magnétique 10 entoure sur environ 180° un tambour cylindrique fixe 12 d'un rayon de plusieurs centimètres, divisé en deux cylindres 14 et 16 séparés par une fente 15 d'une largeur de plusieurs millimètres, perpendiculaire à l'axe 30 du tambour. La figure 4 représente le cylindre inférieur 14 vu de dessus. Le cylindre supérieur 16 du tambour est représenté sur la figure 5. La bande 10 est guidée autour du tambour par deux galets 44 et 46. Le cylindre inférieur 14 est percé d'un alésage axial 31 destiné à recevoir un arbre d'entraînement 36 qui est porté par des roulements et entraîné en rotation par un moteur, non représenté. Dans la fente 15, l'arbre 36 porte un ou plusieurs supports de tête 32 et 34 en une matière plastique élastique ou en un métal tel que du cuivre au berylium, de l'acier inoxydable ou du polyamide. Les supports 32 et 34 sont des rubans d'une épaisseur de plusieurs centièmes de millimètre et d'une longueur de plusieurs millimètres, de sorte que les têtes 18 et 20 fixées sur leurs extrémités, font légèrement saillie, ne dépassant la périphérie du tambour 12 que de quelques centièmes de millimètre. Le ruban souple portant à son extrémité la masse de la tête magnétique constitue le pendule.

Le poids de la tête et du ruban est important par rapport à la force centrifuge jusqu'à ce qu'une vitesse de rotation suffisante soit atteinte. Par conséquent, il faut prévoir un dispositif quelconque pour maintenir la tête et le ruban, perpendiculaires à l'arbre. Deux rondelles côniques 48 et 49, d'un diamètre inférieur de plusieurs millimètres à celui du tambour 12, sont montées de manière divergente sur l'arbre 36 pour permettre aux têtes d'atteindre la vitesse de fonctionnement avant que la force centrifuge ne redresse les supports 32 et 34. Les rondelles 48, 49 sont séparées par une distance ne dépassant pas quelques dixièmes de millimètre au niveau de leur périphérie. Les fils électriques 33 et 35 reliés aux têtes suivent les supports 32 et 34 vers des rainures pratiquées dans l'arbre 36.

A la vitesse de fonctionnement, le poids de la tête est insignifiant par rapport à la force centrifuge. Si le frottement entre la tête 18, 20 et la bande 10 amortit excessivement les oscillations du pendule, on peut ajouter une masse inerte (non représentée) sur chaque tête comme ballast sans modifier la période des oscillations. Si le coefficient d'amortissement des oscillations est faible, une boucle de commande utilisant un détecteur de position ou des informations de suivi de piste peut moduler les forces appliquées aux supports 18, 20.

L'oscillation du pendule peut être entretenue à l'aide de bobines électro-magnétiques 38 et 40 disposées en vis-à-vis dans des ouvertures pratiquées dans les tambours supérieur et inférieur 14 et 16, respectivement au niveau du point médian de l'arc 42 opposé à la surface de contact de la bande sur le tambour. Les bobines comprennent un noyau perméable qui est alimenté en courant alternatif pour agir à leur passage sur les têtes 18 et 20, avec une force d'attraction proportionnelle au carré de l'induction. Un contrôleur analogique ou basé sur un microprocesseur excite l'une ou l'autre des bobines 38 et 40 pour maintenir l'amplitude des oscillations à leur valeur appropriée. L'alimentation des bobines en courant alternatif écarte la possibilité que les têtes 18 et 20 soient magnétisées, évitant de ce fait une diminution considérable de leur performance ; les têtes sont au contraire démagnétisées une fois par révolution.

Un exemple d'un détecteur de position 50 permettant de mesurer l'amplitude des oscillations est représenté sur la figure 6. Ce détecteur pourrait être disposé dans une autre ouverture pratiquée dans la périphérie d'un des cylindres 14, 16 et en quadrature par rapport aux bobines 38 et 40, soit à un maximum d'amplitude des oscillations des têtes. Le détecteur 50 est du type détecteur par inductance mutuelle, comprenant un double circuit magnétique.

A chaque fois qu'une des têtes 18 ou 20 passe, son segment perméable ferme partiellement l'entrefer du circuit constitué des branches 52 et 54, avec un double jeu fonction de la position de la tête. Le circuit constitué des branches 54 et 56 présente un entrefer fixe et par conséquence une réluctance fixe. La différence des réluctances entre les deux circuits peut être mesurée en comparant le couplage entre, d'une part, un enroulement primaire sur la branche commune 54, ou dans des parties symétriques en série des branches 54 et 56 et, d'autre part, deux enroulements secondaires des branches 52 et 56. Un circuit de détection, fonctionnant à une fréquence supérieure à la fréquence de rotation, soit plusieurs centaines de hertz, donne une tension entre les points 58 et 60 proportionnelle au déplacement de la tête 18 ou 20 par rapport à son niveau médian. Un potentiomètre 62 permet d'en ajuster le décalage de zéro avec une résolution de plusieurs micromètres. Selon la position détectée, la tension de la bobine 38 ou 40 est ajustée, avec un retard de trois quarts de tour, par exemple, pour augmenter ou diminuer l'amplitude des oscillations afin de mieux approcher la trajectoire désirée pour obtenir un suivi de piste correct.

La figure 3 représente la trajectoire 26 de la tête par rapport à la bande pendant que la bande se déplace à sa vitesse normale $V_b$. Les composantes de l'angle entre la trajectoire relative et le bord de la bande sont les vecteurs de vitesse de la bande et de la tête. Si la vitesse de la bande est divisée par exemple de moitié, l'angle de la trajectoire de la tête doit être modifié selon 28. Pour pouvoir suivre la piste, lors d'une relecture par exemple, la position de la tête doit être modifiée comme le montrent les flèches 27 et 29.

Si l'on fait varier la vitesse de rotation des têtes autour de sa valeur nominale, pour s'adapter à des rythmes de transfert des informations variant de manière continue, la période des oscillations du pendule restera égale à la période de révolution, suivant de ce fait cette variation et conservant l'utilité de la présente invention.

Bien que, pour la clarté de l'exposé, on ne montre que deux têtes magnétiques 18 et 20, on pourrait utiliser de la même façon un plus grand nombre de têtes, à une piste ou à pistes multiples. Plusieurs têtes pourraient être positionnées en n'utilisant qu'un seul actionneur monté sur le stator ou cylindres fixes. Des excursions de plusieurs centaines de micromètres sont possibles et la réalisation du rotor est simplifiée par rapport à la pratique de l'art antérieur qui consiste à fixer sur le rotor un matériau piézoélectrique avec ses fils de liaison.

## Revendications

1. Ensemble transducteur à têtes magnétiques tournantes, comprenant :
— un arbre rotatif (36) ;
— une tête magnétique élémentaire (18) ; et
— un support (32) fixé au centre de l'arbre (36), support apte à tourner et à être relativement inflexible dans un plan perpendiculaire à l'arbre et à être relativement flexible dans le sens parallèle à l'arbre, et comprenant une extrémité radialement extérieure portant la tête (18) ;
— des moyens d'alignement (38, 40, 50) de suivi de piste pour faire dévier de manière contrôlable la tête parallèlement à l'arbre (36) ; caractérisé en ce que lesdits moyens d'alignement (38, 40, 50) sont apte à agir sur la tête pendant une partie du tour de manière à faire dévier périodiquement la tête au moins une fois par tour.

2. Ensemble transducteur selon la revendication 1, caractérisé en ce qu'il comprend en outre un tambour (12) constitué d'un premier et d'un second cylindres (14, 16) montés coaxialement sur l'arbre, les cylindres ayant des faces planes parallèles séparées par une fente (15) dans laquelle ledit support (32) est disposé de manière rotative, les cylindres ayant des rayons égaux légèrement inférieurs à la distance entre l'axe (30) et le côté radialement extérieur de la tête (18).

3. Ensemble transducteur selon la revendication 2 caractérisé en ce que les moyens d'alignement de suivi de piste comprennent :
— un détecteur (50) disposé à proximité de la périphérie d'un des cylindres pour indiquer la position de la tête (18) dans le sens parallèle à l'axe de rotation (30) lorsque la tête défile en rotation devant le détecteur, et
— des moyens de déplacement (38, 40) permettant de déplacer, de manière contrôlable, la tête dans le sens axial en réponse à des indications provenant du détecteur (50) de façon à exciter des oscillations pendulaires propres de la tête.

4. Ensemble transducteur selon la revendication 3 caractérisé en ce qu'il comprend en outre des moyens destinés à indiquer le rapport entre la vitesse longitudinale d'une bande (10) défilant devant le tambour (12) et la vitesse de rotation des têtes (18, 20), et à déterminer une correction de la position de la tête afin de tracer des pistes (22) sur la bande (10) selon un angle (θ) déterminé.

5. Ensemble transducteur selon la revendication 3 caractérisé en ce que les moyens de déplacement sont constitués par au moins un électro-aimant disposé à proximité de la périphérie des cylindres (38, 40).

6. Ensemble transducteur selon la revendication 3 caractérisé en ce qu'il comprend une pluralité de supports (32, 34) et une tête magnétique (18, 20) fixée à l'extrémité de chaque support.

7. Transducteur magnétique utilisable avec un enregistreur de données sur bande (10) ou une machine de lecture comprenant :
— des premier et second cylindres (14, 16) ayant sensiblement le même rayon, montés coaxialement et séparés par une fente étroite (15), et comprenant des surfaces co-arquées de support de bande ;
— un arbre rotatif (36) disposé dans un passage (31) traversant un des cylindres (14) et comprenant un joint dans la fente ;
— au moins un support (32) fixé sur le joint et comprenant une extrémité s'étendant au plus jusqu'à la périphérie des cylindres de sorte que, à mesure que l'arbre tourne, le support (32) tourne dans un plan dans la fente (15), ledit bras de support étant inflexible dans son plan de rotation et flexible dans le sens sensiblement perpendiculaire à son plan de rotation ;
— une tête magnétique (18) montée sur l'extrémité et dépassant la périphérie des cylindres (14, 16) d'approximativement quelques centièmes de millimètre la tête étant reliée à une paire de conducteurs (33) disposés le long du support (32) et le long de l'arbre ;
caractérisé en ce qu'il comprend :
— au moins un électro-aimant (38) monté sur la périphérie d'un cylindre (14) à l'opposé de la surface de contact de la bande (10) et sur la bissectrice de cet arc débouchant dans la fente, électro-aimant apte à exercer une force magnétique contrôlable sur la tête (18) lorsqu'elle passe et à la faire dévier périodiquement selon le sens perpendiculaire à son axe de rotation (30).

8. Transducteur magnétique selon la revendication 7, caractérisé en ce qu'il comprend en outre au moins un détecteur de position (50) monté sur la périphérie d'un cylindre débouchant dans la fente (15) détecteur apte à détecter le déplacement de la tête (18) par rapport au plan de rotation du support (32).

9. Transducteur selon la revendication 8, caractérisé en ce qu'au moins un électro-aimant est en fait constitué d'une paire d'électro-aimants (38, 40) montés en vis-à-vis, sur la périphérie de chacun des deux cylindres (14, 16).

10. Transducteur selon la revendication 8, caractérisé en ce que le contact de la bande (10) s'étend sur un arc d'environ 180° et en ce que ledit détecteur (50) est disposé à proximité d'une extrémité de cette surface.

11. Transducteur selon la revendication 7, caractérisé en ce qu'au moins un support est constitué de deux supports (32, 34) s'étendant dans des sens diamétralement opposés par rapport à l'arbre (36), et en ce que chaque support comprend une extrémité portant une tête magnétique (18, 20).

12. Transducteur selon la revendication 8, caractérisé en ce que ledit détecteur (50) comprend un détecteur d'inductance mutuelle comprenant une paire de circuits magnétiques (52, 54, 56) séparés par un intervalle qui est ponté inductivement lors de chaque passage de la tête (18) jusqu'à un degré qui est fonction de la proximité, et partant de la position médiane, de la tête magnétique et qui présente par conséquent une réluctance pouvant être mesurée pour déterminer la position de la tête.

13. Transducteur selon la revendication 12, caractérisé en ce qu'il comprend en outre un circuit de contrôle destiné à régler la force exercée par l'électro-aimant (38, 40) en réponse aux mesures de position de la tête effectuée par le détecteur.

14. Transducteur magnétique selon la revendication 7 caractérisé en ce qu'il comprend une paire de rondelles (48, 49) fixée sur l'arbre de part et d'autre du support, lesdites rondelles s'écartant du support (32) et l'une de l'autre à mesure que leur rayon augmente jusqu'à une distance en deçà de la périphérie des cylindres (14, 16).

15. Procédé de modification de la trajectoire d'une tête magnétique tournante (18) par rapport à son plan de rotation, caractérisé en ce qu'il consiste à appliquer périodiquement une force transversale à ce plan pour provoquer une oscillation pendulaire propre dans le champ d'accélération due à la force centrifuge s'exerçant sur la tête.

16. Procédé d'alignement de la trajectoire d'une tête magnétique tournante avec des pistes (22) disposées obliquement sur une bande (10) se déplaçant devant un tambour (12) comprenant la tête et les étapes suivantes :
— l'agencement d'un premier et d'un second cylindres (14, 16) de support de bande, de même rayon et disposés sur un axe commun (30) et séparés par une fente étroite (15), un des cylindres comportant un pasage le long de son axe et un arbre rotatif (36) disposé dans le passage ;
— la fixation sur l'arbre (36) d'un support (32) qui s'étend à travers la fente (15) jusqu'à un rayon quelque peu inférieur à celui des cylindres, le support étant inflexible dans son plan de rotation et flexible dans le sens perpendiculaire au plan de rotation ;
caractérisé par les étapes suivantes :
— la détection de la vitesse longitudinale de la bande relativement à la vitesse de rotation de la tête (18), pour déterminer si la tête balaie la bande (10) selon l'angle (θ) requis pour suivre les pistes (22) ;
— l'utilisation d'un électro-aimant (38, 40) à la périphérie du cylindre agissant sur la tête pendant une partie du tour pour faire dévier périodiquement la tête (18) lorsqu'elle défile en rotation devant l'électro-aimant ; et

— l'ajustement de la force de l'électro-aimant pour faire dévier la tête selon une amplitude telle que la pente de l'oscillation, lorsque la tête traverse son plan de rotation, est la pente nécessaire (θ) pour suivre les pistes (22)

## Claims

1. A transducer assembly with revolving magnetic heads comprising :
— a rotating spindle (36) ;
— a magnetic head element (18) ;
— a support (32) fixed at the center of the spindle (36) said support being suitable for rotating and for being relatively inflexible in a plane perpendicular to the spindle and relatively flexible in the direction parallel to the spindle, and including a radially outermost end which carries the head (18) ; and
— tracking alignment means (38, 40, 50) to cause the head to deviate in a controllable manner parallel to the spindle (36) ; the assembly being characterized in that the alignment means (38, 40, 50) are suitable for acting on the head during a part of a revolution in such a way as to cause the head to move in a periodic manner at least once per revolution.

2. A transducer assembly according to claim 1, characterized in that it also comprises a drum (12) constituted by first and second cylinders (14, 16) mounted coaxially on the spindle, said cylinders having parallel plane faces separated by a slot (15) in which said support (32) is rotatably disposed, the cylinders having the same radius which is slightly smaller than the distance between the axis (30) and the radially outermost side of the head (18).

3. A transducer assembly according to claim 2, characterized in that the tracking alignment means comprise :
— a detector (50) disposed close to the edge of one of the cylinders in order to indicate the position of the head (18) in a direction parallel to the axis of rotation (30) as the head revolves past the detector, and
— displacement means (38, 40) which provide controllable movement of the head in an axial direction in response to indicating signals from the detector (50), in such a manner as to excite natural pendulum oscillations of the head.

4. A transducer assembly according to claim 3, characterized in that it also comprises means for indicating the relationship between the longitudinal speed of a tape (10) going past the drum (12) and the speed of rotation of the heads (18, 20), and means for determining the correction in head position necessary in order to scan the tracks (22) on the tape (10) at a determined angle (θ).

5. A transducer assembly according to claim 3, characterized in that the displacement means are constituted by at least one electromagnet located close to the periphery of the cylinders (38, 40).

6. A transducer assembly according to claim 3, characterized in that it includes a plurality of supports (32, 34) and a magnetic head (18, 20) fixed to the end of each support.

7. A magnetic transducer suitable for use with a data tape recorder or reading machine comprising :
— first and second coaxially mounted cylinders (14, 16) of substantially equal radius and separated by a narrow slot (15) and having correspondingly-curved tape support surfaces ;
— a rotary spindle (36) located in a passage (31) through one of the cylinders and including a joint in said slot ;
— at least one support (32) fixed on the joint, and including an end extending no further than the periphery of the cylinders so that as the spindle rotates, the support (32) rotating in the plane of the slot (15), said support arm being inflexible in its plane of rotation and flexible in the direction perpendicular to its plane of rotation ;
— a magnetic head (18) mounted on the end of the support and extending past the periphery of the cylinders by approximately a few hundredths of a millimeter, the head being connected to a pair of electrical conductors (33) disposed along the length of the support (32) and the spindle ;
said transducer being characterized in that it comprises :
— at least one electromagnet mounted on the periphery of one of the cylinders (14) at a location opposite to the contact surface of the tape (10) and on the bisector of that arc which lies in the slot, said electromagnet being suitable for exerting a controllable magnetic force on the head (18) as it passes and for causing it to deviate in a periodic manner in a direction perpendicular to its axis of rotation.

8. A magnetic transducer according to claim 7, characterized in that it also includes at least one position detector (50) mounted on the periphery of one of the cylinders and extending into the detection slot (15) so as to detect the displacement of the head (18) with respect to the plane of rotation of the support.

9. A transducer according to claim 8, characterized in that at least one of the electromagnets is, in fact, constituted by a pair of electromagnets (38, 40) mounted opposite each other, on the peripheries of respective ones of the two cylinders (14, 16).

10. A transducer according to claim 8, characterized in that the zone of contact with the tape (10) extends over an arc of about 180°, and in that said detector (50) is located adjacent one end of that zone.

11. A transducer according to claim 7, characterized in that said at least one support is, in fact, constituted by two supports (32, 34) which extend in diametrically opposite directions from the spindle (36), and in that each support includes and end which carries a magnetic head (18, 20).

12. A transducer according to claim 8, characterized in that said detector (50) comprises a mutual inductance detector which comprises a pair of magnetic circuits (52, 54, 56) separated by a gap, each passage of the head (18) serving to bridge the gap inductively by an amount which is a function of the proximity of the head and its deviation from its mid position, the detector consequently exhibiting reluctance which may be measured in order to determine the position of the head.

13. A transducer according to claim 12, characterized in that it also comprises a control circuit for regulating the force exerted by the electromagnet (38, 40) in response to the position of the head measured by the detector.

14. A magnetic transducer according to claim 7, characterized in that it comprises a pair of washers (48, 49) fixed to the spindle on either side of the support, said washers being shaped so as to be further from the support and from each other with increasing radius up to a distance just short of the peripheries of the cylinders.

15. A method of modifying the trajectory of a rotating magnetic head (18) relative to its plane of rotation, the method being characterized in that it consists in periodic application of a force transverse to said plane in order to stimulate a natural pendulum resonance in the acceleration field due to the centrifugal force exerted on the head.

16. A method of aligning the trajectory of a rotating magnetic head with tracks (22) which are obliquely disposed on a tape (10) moving past a drum (12) including the head, the method comprising the following steps :
— disposing first and second tape support cylinders (14, 16) of identical radius on a common axis (30) and separated by a narrow slot (15), one of the cylinders including an axial passage and a rotating spindle (36) located in the passage ;
— fixing a support (32) on the spindle (36), the support extending through the slot to a radius slightly less than that of the cylinders, the support being inflexible in its plane of rotation and flexible in a direction perpendicular to its plane of rotation ;
the method being characterized in that it comprises the following steps :
— detecting the longitudinal speed of the tape relative to the speed of rotation of the head (18) in order to determine whether the head is scanning the tape (10) at the necessary angle (θ) for following the tracks (22) ;
— using an electromagnet (38, 40) at the periphery of one of the cylinders to act on the head during part of a revolution to make the head (18) deviate periodically as it rotates past the electromagnet ; and
— adjusting the force exerted by the electromagnet in order to make the head deviate by an amplitude such that the slope of the oscillation as the head passes through its plane of rotation is the slope (θ) necessary for following the tracks (22).

## Patentansprüche

1. Meßwandleranordnung mit rotierenden Magnetköpfen, die enthält :
— eine rotierende Welle (36) ;
— einen elementaren Magnetkopf (18) und
— eine Halterung (32), die in der Mitte der Welle (36) befestigt und in der Lage ist, ·sich relativ unbiegsam in einer zur Welle senkrechten Ebene zu drehen und relativ biegsam in der Richtung parallel zur Welle zu sein, und die ein radial äußeres Ende aufweist, das den Kopf (18) trägt ;
— Ausrichtungsmittel (38, 40, 50) für die Spurverfolgung, um den Kopf parallel zur Welle (36) auf kontrollierbare Weise abzulenken, dadurch gekennzeichnet, daß die Ausrichtungsmittel (38, 40, 50) in der Lage sind, auf den Kopf während eines Teiles der Umdrehung in der Weise zu wirken, daß der Kopf periodisch wenigstens einmal pro Umdrehung abgelenkt wird.

2. Meßwandleranordnung gemäß Patentanspruch 1, dadurch gekennzeichnet, daß er ferner eine Trommel (12) enthält, die aus einem ersten und aus einem zweiten Zylinder (14, 16) besteht, die koaxial auf die Welle montiert sind, wobei die Zylinder ebene parallele Flächen haben, die durch einen Spalt (15) getrennt sind, in dem besagte Halterung (32) drehbar angeordnet ist, wobei die Zylinder gleiche Radien haben, die etwas kleiner als die Entfernung zwischen der Achse (30) und der radial äußeren Seite des Kopfes (18) sind.

3. Meßwandleranordnung gemäß Patentanspruch 2, dadurch gekennzeichnet, daß die Ausrichtungsmittel für die Spurverfolgung enthalten :
— einen Abtaster (50), der in der Nähe des Umfangs eines der Zylinder angeordnet ist, um die Position des Kopfes (18) in der Richtung parallel zur Rotationsachse (30) anzuzeigen, wenn der Kopf in Rotation vor dem Abtaster vorbeiläuft, und
— Verschiebungsmittel (38, 40), die auf kontrollierbare Weise ein Verschieben des Kopfes in axialer Richtung in Reaktion auf Anzeigegrößen erlauben, die vom Abtaster (50) kommen, um auf diese Weise pendelartige Eigenschwingungen des Kopfes zu erzeugen.

4. Meßwandleranordnung gemäß Patentanspruch 3, dadurch gekennzeichnet, daß er ferner Mittel enthält, die dazu bestimmt sind, das Verhältnis zwischen der Längsgeschwindigkeit eines vor der Trommel (12) vorbeilaufenden Bandes (10) und der Rotationsgeschwindigkeit der Köpfe (18, 20) anzuzeigen und eine Korrektur der Kopfposition zu bestimmen, mit dem Ziel, Spuren (22) auf dem Band (10) gemäß einem bestimmten Winkel (θ) aufzuzeichnen.

5. Meßwandleranordnung gemäß Patentanspruch 3, dadurch gekennzeichnet, daß die Verschiebungsmittel aus mindestens einem Elektromagneten bestehen, der in der Nähe des Umfangs der Zylinder (38, 40) angeordnet ist.

6. Meßwandleranordnung gemäß Patentanspruch 3, dadurch gekennzeichnet, daß sie eine Mehrzahl von Halterungen (32, 34) und einen am Ende jeder Halterung befestigten Magnetkopf (18, 20) aufweist.

7. Magnetischer Meßwandler, der mit einem Datenaufzeichnungsgerät zur Aufzeichnung auf Band (10) oder einer Lesemaschine benutzt werden kann und enthält :
— einen ersten und einen zweiten Zylinder (14, 16), die im wesentlichen denselben Radius aufweisen sowie koaxial und durch einen engen Spalt getrennt montiert sind un gleichsinnig gekrümmte Oberflächen für die Bandabstützung aufweisen ;
— eine rotierende Welle (36), die in einem den Zylinder durchdringenden Durchlaß (31) angeordnet ist und eine Dichtung in dem Spalt enthält ;
— wenigstens eine Halterung (32), die auf der Dichtung befestigt ist, und ein Ende hat, das sich höchstens bis zum Umfang der Zylinder erstreckt, so daß in dem Maße, wie die Welle sich dreht, die Halterung (32) sich in einer Ebene in dem Spalt (15) dreht, wobei der besagte Halterungsarm in seiner Rotationsebene unbiegsam und in der Richtung im wesentlichen zu seiner Rotationsebene senkrechten Richtung biegsam ist ;
— einen Magnetkopf (18), der auf das Ende montiert ist und über den Umfang der Zylinder (14, 15) näherungsweise einige Hundertstel eines mm hinausragt, wobei der Kopf mit einem Leiterpaar (33) verbunden ist, die entlang der Halterung (32) und entlang der Welle angeordnet sind ;
dadurch gekennzeichnet, daß er enthält :
— wenigstens einen Elektromagneten (38), der am Umfang eines Zylinders (14) gegenüber der Kontaktfläche des Bandes (10) und auf der Halbierungslinie dieses Bogens montiert ist, die in den Spalt übergeht, wobei der Elektromagnet in der Lage ist, eine kontrollierbare elektromagnetische Kraft auf den Kopf (18) auszuüben, wenn er vorbeiläuft, und ihn periodisch in einer Richtung senkrecht zur Richtung seiner Rotationsachse (30) abzulenken.

8. Magnetischer Meßwandler gemäß Patentanspruch 7, dadurch gekennzeichnet, daß er ferner wenigstens einen Positionsabtaster (50) enthält, der am Umfang eines Zylinders montiert ist, der in den Spalt (15) übergeht, wobei der Abtaster in der Lage ist, die Verschiebung des Kopfes (18) in bezug auf die Rotationsebene der Halterung (32) zu melden.

9. Meßwandler gemäß Patentanspruch 8, dadurch gekennzeichnet, daß wenigstens ein Elektromagnet aus einem Paar von Elektromagneten (38, 40) besteht, die einander gegenüber auf dem Umfang jedes der zwei Zylinder (14, 16) montiert sind.

10. Meßwandler gemäß Patentanspruch 8, dadurch gekennzeichnet, daß der Kontakt des Bandes (10) sich über einen Bogen von ungefähr 180° ausdehnt und daß der Abtaster (50) in der Nähe einer der Enden dieser Oberflächen angeordnet ist.

11. Meßwandler gemäß Patentanspruch 7, dadurch gekennzeichnet, daß wenigstens eine Halterung aus zwei Halterungen (32, 34) besteht, die sich in diametral entgegengesetzter Richtung in bezug auf die Welle (36) ausdehnen, und daß jede Halterung ein Ende aufweist, das einen Magnetkopf (18, 20) trägt.

12. Meßwandler gemäß Patentanspruch 8, dadurch gekennzeichnet, daß der Abtaster (50) einen Detektor wechselseitiger Induktanz enthält, der aus einem Paar magnetischer Kreise (52, 54, 56) besteht, die durch ein Intervall getrennt sind, das induktiv während jedes Durchgangs des Kopfes (18) bis zu einem Grad überbrückt wird, der von der Annäherung und, ausgehend von der mittleren Position vom Magnetkopf abhängig ist und folglich einen magnetischen Widerstand darstellt, der gemessen werden kann, um die Kopfposition zu bestimmen.

13. Meßwandler gemäß Patentanspruch 12, dadurch gekennzeichnet, daß er ferner einen Steuerkreis enthält, der dazu bestimmt ist, die durch die Elektromagneten (38, 40) ausgeübte Kraft entsprechend auf die durch den Detektor ausgeführten Positionsmessungen zu regeln.

14. Magnetischer Meßwandler gemäß Patentanspruch 7, dadurch gekennzeichnet, daß er ein Paar Unterlegscheiben (48, 49) enthält, die beiderseits der Halterung befestigt sind, wobei diese Unterlegscheiben sich von der Halterung und voneinander in dem Maße entfernen, wie ihr Radius sich vergrößert, bis zu einem Abstand innerhalb des Umfangs der Zylinder (14, 16).

15. Verfahren zur Bahnänderung eines rotierenden Magnetkopfes (18) in bezug auf seine Rotationsebene, dadurch gekennzeichnet, daß es darin besteht, periodisch eine transversale Kraft auf diese Ebene auszuüben, um eine pendelartige Eigenschwingung in dem Beschleunigungsfeld aufgrund der Zentrifugalkraft hervorzurufen, die auf diesen Kopf ausgeübt wird.

16. Verfahren zur Ausrichtung der Bahn eines sich drehenden Magnetkopfes mit Spuren (22), die schräg auf einem Band (10) angeordnet sind, das sich vor einer den Kopf aufweisenden Trommel (12) bewegt, mit folgenden Stufen :
— die Anordnung eines ersten und zweiten Zylinders (14, 16) von gleichem Radius für die

9

Bandabstützung auf einer gemeinsamen Achse (30) und getrennt durch einen engen Spalt (15), wobei einer der Zylinder einen Durchlaß entlang seiner Achse und eine in dem Durchlaß angeordnete rotierende Welle (36) enthält ;

— die auf der Achse (36) erfolgende Befestigung einer Halterung (32), die sich über den Spalt (15) bis zu einem Radius erstreckt, der etwas kleiner als der der Zylinder ist, wobei die Halterung in ihrer Rotationsebene unbiegsam und in ihrer zur Rotationsebene senkrechten Richtung biegsam ist ;

durch folgende Stufen gekennzeichnet :

— die Abtastung der Längsgeschwindigkeit des Bandes relativ zur Rotationsgeschwindigkeit des Kopfes (18), um zu bestimmen, ob der Kopf das Band (10) unter dem Winkel (θ) überstreicht, der erforderlich ist, um den Spuren (22) zu folgen ;

— Verwendung eines Elektromagneten (38, 40) am Umfang des Zylinders, der auf den Kopf während eines Teiles der Umdrehung wirkt, um den Kopf (18) periodisch abzulenken, wenn er bei der Rotation vor dem Elektromagneten vorbeiläuft ; und

— die Justierung der Kraft des Elektromagneten, um den Kopf mit einer solchen Amplitude abzulenken, daß die Neigung der Schwingung, wenn der Kopf die Rotationsebene überquert, gleich der notwendige Neigung (θ) ist, um den Spuren (22) zu folgen.

# FIG. 1

# FIG. 2

1

FIG. 3

FIG. 4

FIG. 5

FIG. 6